# EUROPEAN PATENT APPLICATION

(11) **EP 4 571 651 A1**
(43) Date of publication of application: **18.06.2025**
(21) Application number: 23216575.3
(22) Date of filing: 14.12.2023
(51) Int. Cl.: G06T 11/00

(54) **METAL ARTIFACT REDUCTION FOR METAL OBJECTS OUTSIDE THE SCAN FIELD OF VIEW**

(71) Applicant: Koninklijke Philips N.V., 5656 AG Eindhoven (NL)
(72) Inventor: BRENDEL, Bernhard Johannes, Eindhoven (NL); SCHAEFER, Dirk, Eindhoven (NL); VAN DE HAAR, Peter George, 5656AG Eindhoven (NL)
(74) Representative: Philips Intellectual Property & Standards

(57) **Abstract**

A system (IQE) and related method for image processing, comprising an input interface (IN) for receiving a first image volume (V1) reconstructable from projection data (λ) acquirable by a tomographic imaging apparatus's X-ray detector of a first region (EFOV) of an imaging domain (ER). An occluding object (OO) resides in said first region during the acquisition, but the occluding object (OO), or a part thereof, is outside a second region (SFOV) of the imaging domain (ER), different from the first region (EFOV), and with the said second region (SFOV) includable a region of interest to be imaged. An artifact corrector (AC) corrects, based on the said first volume (V1), for image artifact that is causable by the said occluding object (OO) in a second image volume (V2) reconstructable from the said projection data (λ) of the second region (SFOV) in the said domain (ER).

## Description

### FIELD OF THE INVENTION

The invention relates to a system of image processing, to an arrangement including such a system, to a related method, to a use of image information in a reconstructed image for an extended field, to a computer program element, and to a computer readable medium.

### BACKGROUND OF THE INVENTION

C-arm based Cone beam CT (computed tomography) (CBCT) imaging is often used in interventions, such as to guide medical user (interventionist) in placing a metal implant during a surgical intervention for example. A presence of metal objects inside, and possible outside, a scan field of view is a common scenario for CBCT imaging, but also for other X-ray based tomographic modalities.

Presence of metal objects, or of other high-density objects, in the field of view or outside same, may lead to severe artifacts in the reconstructed tomographic image (such as an image volume), which might reduce its diagnostic value.

To tackle this problem, image processing algorithms, such as metal artifact reduction (MAR) methods/algorithms exist to improve image quality (IQ) in such reconstructions. One such example MAR algorithm is described by EMeyer et al in their paper "Frequency split metal artifact reduction (FSMAR) in computed tomography", published in "Medical Physics", Volume 39(4), April, pp 1904-16 (2012).

There are deficiencies in such existing MAR or similar artifact removal methods or algorithms, as some such MAR methods are only able to remove metal artifacts that originate from metal objects inside the scan field of view (SFOV), ie, form a part of the image domain or examination region that is reconstructed. The image domain or examination region is a portion of 3D space, between an X-ray source of the imaging apparatus and an X-ray detector thereof, where the patient, or at least the region of medical interest (ROI), resides during imaging. However, if a metal object is located outside the SFOV, it still can lead to severe metal artifacts (such as streak artifacts) inside the SFOV, especially if the distance of the metal object to a boundary of the SFOV is small. Such "outside-originating" artifacts cannot be addressed by such existing MAR methods.

Indeed, the scenario that, eg, metal objects are located outside the SFOV during a CBCT acquisition is realistic, since the SFOV is sometimes rather small, due to the limited size of the detector for example. Thus, radio-opaque, artifacts causing objects, such as surgical clamps, beads that may be used for navigation, k-wires (Kirschner wires), etc, or even the existing or to be planted implants themselves, might be located fully, or at least partially, outside the SFOV.

### SUMMARY OF THE INVENTION

There may therefore be a need for improved tomographic imaging, in particular there may be a need to reduce artifacts in tomographic imaging.

An objective of the present invention is achieved by the subject matter of the independent claims where further embodiments are incorporated in the dependent claims. It should be noted that the following described aspect of the invention equally applies to the imaging arrangement, to the related method, to the said use, to the computer program element and to the computer readable medium.

According to a first aspect of the invention there is provided a system for image processing, comprising:
An input interface for receiving a first image volume reconstructable from projection data acquirable by a tomographic imaging apparatus's X-ray detector of a first region of an imaging domain, with at least one occluding object, or at least a part thereof, residable/situatable in said region during the acquisition, but the at least one occluding object, or at least a part of the occluding object, residable outside a second region of the imaging domain, different from the first region , and with the said second region includable a region of interest to be imaged, and
an artifact corrector capable of correcting, based on the said first volume, for image artifact causable by the said occluding object in a second image volume reconstructable from the said projection data of the second region in the said domain (ER).

The first region may comprise of voxels, and form a subset of the imaging domain being a superset. The imaging domain may for a portion of 3D space, such as the examination region of the imaging apparatus.

The second image reconstructable may be the object/purpose of the imaging as per a medical protocol used for the acquisition of the projection data.

The correcting by an artifact corrector may comprise segmenting the first volume for image strictures of the one or more occluding objects.

In embodiments, the first region is larger than the second region.

In embodiments, the first and second region are intersecting.

In embodiments, the second region is a sub-region of the first region.

In embodiments, the occluding object is so residable wholly outside the second region.

In embodiments, a correction operation of the artifact corrector is based on forward projection operation across the first volume. Specifically, the segmented first image may be forward projected. Projection footprints in the forward projected projection may then be used to remove/replace/interpolate in the original projection data to obtained enhanced projection imagery. This may then be reconstructed in a second pass to obtain the second image as quality enhanced image, which may then be used for the intended medical purpose, task. It may be displayed for radiological review, used for planning, etc, or may be stored for latter review or any other use. The size/FOV of the second volume may be prescribed by user interface or protocol for the intended image purpose. The size may correspond to the size of the region of interest, such as an organ, part if organ, group of organs, body region, tissue type(s), etc,

In embodiments, the, or a correction operation by artifact corrector is based on a segmentation in the first volume of a representation of the said occluding object.

In embodiments, the first volume is so reconstructable at a lower resolution than the second volume.

In embodiments, the occluding object includes metal.

In embodiments, the imagining apparatus is any one of: a computed tomography scanner, CT, a cone beam CT, an interventional X-ray imaging apparatus such as of the C- or U-arm type.

In another aspect there is provided an imaging arrangement including the system of any one of the mentioned embodiments, and any one or more of: i) the detector, ii) the imaging apparatus (IA), iii) an operator console or work station of the imaging apparatus, iv) a reconstructor supplying at least one of the first and second image volume.

In another aspect there is provided a method of image processing, comprising:
receiving a first image volume V1 reconstructable from projection data (λ) acquirable by a tomographic imaging apparatus's X-ray detector of a first region of an imaging domain, with at least one occluding object, or at least a part thereof, residable in said region during the acquisition, but the at least one occluding object, or at least a part of the occluding object, residable outside a second region of the imaging domain (ER), different from the first region, and with the said second region includable a region of interest to be imaged, and
correcting, based on the said first volume, for image artifact causable by the said occluding object in a second image volume reconstructable from the said projection data of the second region in the said domain.

In yet another aspect there is provided at least one computer program element, which, when being executed by at least one computing system, is adapted to cause the at least one computing system to perform the method.

In another aspect there is provided at least one computer readable medium having stored thereon the at least one program element.

In yet another aspect there is provided a use of image information in a reconstructed image for an extended field of view in artifact correction in a smaller reconstructable image for a smaller field of view, where the corrected for artifact is causable by at least one occluding object situatable at least partly outside the smaller field of view.

The proposed system and related method allows implementing, even extending, existing MAR (metallic artifact reduction) methods. The proposed system can be retrofitted into existing MAR setups or other artifact reduction methods.

The proposed system and method is capable of addressing the issue of image artifacts, such as metal artifacts, that originate from at least one metal object outside the scan field of view (SFOV). Unlike existing MAR methods, in the proposed system, the FOV in reconstruction is extended to the so-called extended field of view (EFOV), which is larger than the scan field of view SFOV, and covers the space in examination region where the one or more occluding objects is/are present.

The proposed EFOV may be used in a context of a two-pass reconstruction, with a first pass reconstruction for the EFOV, whilst the second pass reconstruction is confined to the actual SFOV. The part of the EFOV that is not covered by the SFOV and where the one or more occluding objects may reside, may be referred to herein as the extension region.

Preferably but optionally, for the EFOV reconstructions, a suited truncation correction method may be used to improve performance. But even then, the reconstructed objects in the extension region may still be affected by truncation artifacts and moreover by so called limited angle artifacts. These artifacts impede diagnostic usage of the extension region. Nevertheless, in tests it turned out that image quality is good enough in the extension region to reliably localize structure of the occluding objects (eg, the said metal objects), and thus to use the EFOV reconstructions in the proposed setup to consider such occluding object(s) in the extension region in the artifact reduction processing.

A main application of the proposed system includes CBCT imaging, eg, in an interventional imager, such as in a C-arm or in dental or other. The system and method may also be used in other X-ray based tomographic systems in which artifacts reduction due to occluding objects outside the SFOV is desirable.

"*user*" relates to a person, such as medical personnel or other, operating the imaging apparatus or overseeing the imaging procedure. In other words, the user is in general not the patient.

"*X*-*radiation*" may be used herein as a shorthand for X-ray radiation as may be used in medical applications.

"*(X radiation) occluding object*" may include metal or any other object with x-ray attenuation significantly higher than human bone tissue, i.e., objects are essentially radiopaque to clinically applied X-ray radiation. Such highly X-radiation attenuating/radiation objects may be foreign object(s) that happen to be in the examination region of the imaging apparatus during imaging. Such foreign object(s) may be internal (inside patient's body), or external object(s), including object(s) away from, or on patient's body. If they are external to patient body, they may have been left there during imaging inadvertently. Such internal or external foreign object(s) may include, or may be formed of, metallic matter, or other matter of very high density. Such objects are deemed foreign if they do not form biological material which is an integral, grown, part of patient's anatomy. For example, bones are not foreign objects, whilst pacemaker or other implants, whilst internal, are. Although reference is made herein to the "occluding object", there may be more than one, discrete masses forming such objects, distributed in some way. At least one such occluding object is wholly outside the scan field of view. Alternatively, or in addition, at least one part of at least one such object extends outside the scan field of view. Thus, such occluding object outside the scan field of view may be part of a larger object, whose one part may be outside the scan field of view, but whose at least one other part part(s) does extend into the scan field of view. Thus, the occluding object outside the scan field of view may not necessarily be a physically separate object on its own, although this may well be so, but may be part of a lager object. Examples of internal such occluding objects include orthopedic implants (nails, hip bone implant), a pace-maker, or in dental contexts, tooth fillings, crowns, etc. External objects may include piercings, jewelry, zippers, etc. Inadvertent external occluding objects may occur in trauma settings, where they may not be always time to remove such occluding objects prior imaging, due to oversight. In contrast agent support imaging protocols, such as in fluoroscopy/angiography, the occluding object may be a mass of very high concentration of the contrast agent (e.g., Iodine) outside the scan field of view, e.g., because the contrast agent "supply pipe" is often located inside the extended field of view, but outside the scan field of view. Whilst in this disclosure reference is made often to metal/metallic, in terms of the occluding object, and such they often are, such reference is mainly synecdochical herein, as the occluding object may be of a radio-opaque material other than metal or may include such material instead of a metal.

"*artifacts*" as used herein are bogus image structures that do not represent in themselves actual underlying structure(s) of interest to be imaged. They may be the result of how a tomographic reconstruction algorithm behaves when reconstructing from projection data acquired whilst such occluding object(s) were present in the examination region. Whilst the plural is often used for artifacts, this is not limiting herein.

"*volume*" and "*image*/*imagery*" may be used herein interchangeably as far is they concern data in image domain, as the result of a tomographic reconstruction ins first or second pass. Thus image/volume may indeed be a reference to 3D image data, but may instead be a reference to individual sectional slice(s), as needed. Thus, use of "*volume*" herein does not exclude a single tomographic slice as may be sufficient in some applications. Thus, "*volume*" does not exclude a "2D" image locatable in 3D space, but in most cases refers to a 3D volume.

However, reference to "*projection data*/*image*/*imagery*" precludes true 3D volume data, and is always spatial 2D as such data is acquired in projection domain, different from image domain. Each of projection domain data or image domain image/volume may however have a time dimension, such as in fluoroscopy or angiography, where a data stream over time is acquired and processed. The principles described herein are equally applicable to such data with additional time dimension, sometimes called "4D" imaging.

"*diagnostic*" for image/volume as may be used herein is not necessarily to mean that the image/volume is for diagnostic purposes only, although such diagnostic use is indeed envisaged in some embodiments. Instead, image/volume may be used for therapy, planning or other medical tasks. In general, the image/volume (such as the second pass reconstructed volume/image) is such that it has an IQ (image quality) sufficient for the medical task intended, and the medical purpose for which the second image/volume is needed. Thus, term "diagnostic" in relation to the second image/volume is used herein as a synecdoche. The first locator image/volume as used herein however may not, in most cases will, not comply with the IQ as it serves herein as different purpose, namely for locating structure of occluding objects, as will be described herein in more detail.

### BRIEF DESCRIPTION OF THE DRAWINGS

Exemplary embodiments of the invention will now be described with reference to the following drawings, which, unless stated otherwise, are not to scale, wherein:
Fig. 1 shows a schematic block diagram of an imaging arrangement;
Figs 2A-C illustrate certain image artifacts, and their cause, as may emerge in particular in connection with X-ray based tomographic reconstruction;
Fig. 3 shows a block diagram of an image enhancer component configured for artifact reduction according to an embodiment;
Fig. 4 shows data generated by, and interaction of, components of the image quality enhancer of Fig. 3 as per some embodiments; and
Fig. 5 shows a flow chart of a method of reducing artifacts in tomographic reconstruction according to one embodiment.

### DETAILED DESCRIPTION OF EMBODIMENTS

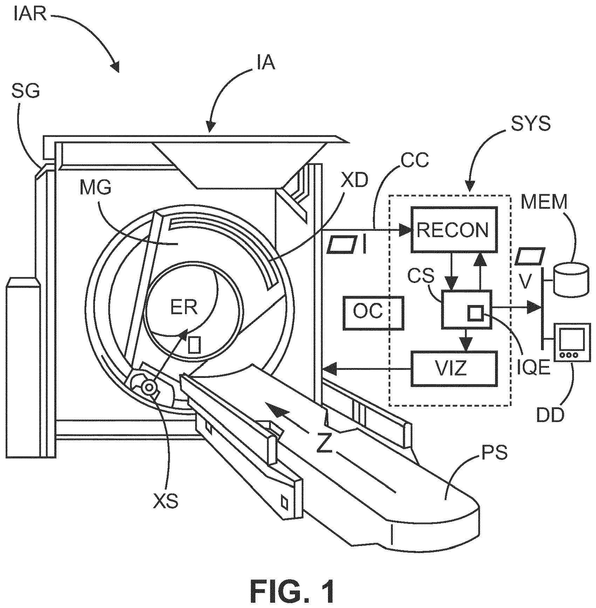

Reference is first made to Fig. 1 which shows a schematic block diagram of a medical imaging arrangement IAR as envisaged herein in embodiments. The arrangement IAR may include a medical imaging apparatus IA, preferably of the tomographic X-ray based type, but other tomographic modalities such as MRI, PET and others still are not excluded herein.

The arrangement IAR further includes a computing system CS, preferably remotely located from the imaging apparatus. The computing system CS may be implemented as a Cloud solution, run on one or more servers. The computing system may be integrated wholly or in part(s) into a workstation (not shown) associated with the imager IA. In addition or instead, the computing system CS may be integrated wholly or in part(s) in an operator console OC of the imager IA.

The imaging apparatus IA may be installed in a clinical facility, such as in a hospital for example. The imager IA may be communicatively coupled via a wired or wireless (or partly both) communication channel CC to computing system CS. The computing system allows for processing projection imagery λ acquired by the imager IA as will be explored in more detail below. Broadly, the computing system CS may include an image quality enhancer IQE, configured to reduce artifacts in tomographic imaging,

The imaging apparatus IA is operable to generate, in particular acquire, the projection data λ which are forwarded through the communication channel to the computing system CS for reconstruction into tomographic (sectional) images. The computing system CS runs one or more reconstructor units RECON, which implements one or plural tomographic reconstruction algorithms. In general, and as will be explained in more detail below, reconstruction algorithms implement a mapping that maps projection data λ located in projection domain into image domain. Image domain is a portion of 3D space and is located in the examination region ER of the imaging apparatus, whilst the projection domain is in 2D, and is located at an (X-ray) detector XD of the imaging apparatus IA.

The imaging apparatus IA being preferably of the tomographic type, is configured for multi-directional projection image acquisition. The imaging apparatus IA is thus capable of acquiring projection images λ along different projection directions α relative to the examination region ER, and thus the anatomical region of interest ("ROI") of the patient that is to be imaged as per the imaging task. Acquisition may be done in embodiments by a rotational system, wherein at least the X-ray source XS is arranged in a moveable gantry MG. The movable gantry (and with it the X-ray source XS in embodiments) is rotatable in a stationary gantry SG around the examination region ER in which the patient/ROI resides during imaging. Opposite the X-ray source in the movable gantry there is the X-ray detector XD which may rotate with the gantry and X-ray source around the examination region ER to realize the different projection directions α. As schematically indicated in Fig. 1, patient's longitudinal or imaging axis Z may extend into the examination region ER during imaging. Patient PAT may lie on an optional patient support PS, such as a bed, which is positioned at least partly in the examination region ER during imaging. In some, but not all embodiments, helical imaging protocols are envisaged herein where there is a relative lateral motion along the longitudinal axis Z between X-ray source XS and the patient PAT. For example, the patient support PS may be advanced through the examination region ER during the multi-directional projection image acquisition, for example during rotation of the X-ray source XS around the patient.

The CT scanner setup as illustrated in the Fig. 1 is merely according to one embodiment, and other tomographic imaging equipment such as C-arm or U-arm scanners, Cone beam CT arrangements, mammographic imagers, etc., are not excluded herein. C-arm cone beam imager are preferred herein in some embodiments. In addition, the multi-directional acquisition capability may not necessarily result from a rotational system such as shown in Fig. 1. Non-rotational imaging systems are also envisaged, such as in CT scanners of the fourth or higher generation, where multiple X-ray sources are arranged around the examination region in a source annulus for example. In addition, or instead, the detector XD may be arranged as a detector annulus around the examination region. Thus, in such systems there is no rotation of the X-ray source XS or detector XD, or of both.

As said, there may be an operator console OC through which a user, such as medical personnel, controls imaging operation. For example, user may request initiating the projection imagery λ acquisition or may request reconstruction or other operations, or may initiate transmission of acquired data λ to the computing system CS, or may halt such transmission as required.

During imaging, an X-ray beam issues forth, along the different projection directions α, from a focal spot of the X-ray source(s) XS. The beam passes through the examination region with the patient in it. The x-radiation interacts with patient tissue. The X-ray beam is modified as a result of this interaction. In general, such X-ray beam modification includes attenuation and scattering of the original incoming X-ray beam. The modified X-radiation is then detected as a spatial distribution of various intensities at X-ray sensitive pixels of the detector XD.

It is not necessary herein to acquire projection images λ over a full 360° angular range around the examination region ER, although this can be done. Acquisition over a partial angular range such as a range of 270°, 180°, or even less, may be sufficient. The X-ray detector is preferably configured for acquisition of 2D projection images with rows and columns of intensity values as registered by the detector pixels. That is, the detector pixels themselves may be arranged in a matrix layout. Such a 2D layout may be used in divergent imaging geometries, such as cone or fan beam or others. However, one dimensional detector pixel layouts (such as along a single line) are not excluded herein, and neither are parallel beam geometries.

The reconstructed volumetric imagery V may be visualized by a visualizer VIZ. The visualizer VIZ may generate a graphics display of the volume or a given slice. The graphics display may be displayed on a display device DD. The visualizer VIZ may map a section of image volume V, or the image volume V as a whole, onto a grey value or a color palette. The visualizer VIZ may control, via suitable interfaces, video circuitry to effect display of the graphics display on the display device DD. In addition, or instead of so displaying, the reconstructed imagery V may be stored in a memory for later review or for other types of processing. Such a memory may include an image repository, such as a database (eg, PACS), or other (preferably) non-volatile data storage arrangement.

The reconstructed volume imagery V may be manipulated, for example by reformatting, to define cross-sectional planes that are different from the sectional plane defined by the imaging geometry. Such reformatting may allow medical user to better discern tissue type or anatomic details of the internals of the patient, in dependence on the medical purpose at hand, such as for diagnosis or preparation for some type of treatment, etc.

Turning in more detail to the reconstructor RECON, this may implement one or more reconstruction algorithms to process the projection imagery λ. Specifically, the reconstructor RECON may compute sectional image *V* of the examination region (with the patient in it) for diagnostic, therapeutic or other purposes. The reconstructor RECON may be able to produce sectional volumetric image data ("image volume(s)") V. However, this does not exclude producing a single image slice in the examination region as required. Thus, the reconstructed imagery may be denoted herein as V which may include the whole volume, a partial volume or a specific section therethrough. Volumetric reconstruction may be further facilitated by the helical movement and/or the 2D layout of the X-ray detector XD. The reconstructor RECON's computations are based on a tomographic reconstruction algorithm, such as filtered back-projection (FBP), iterative reconstruction, algebraic reconstruction, etc. In a good many of cases, the reconstruction may be implemented on a dedicated piece of hardware, such as a workstation which may be coupled to a given CBCT or CT scanner.

Reconstruction algorithms as used herein by reconstructor RECON may be of the iterative type. That is, based on a given set of projection data, the reconstruction algorithms proceeds in iterative fashion by populating voxel grids of the image domain/examination region ER with image values. The image values may be provided in a suitable scale, such as in Hounsfield units (HU), or any other. The image values are then adapted based on backward projection and optionally on forward projection, as required. Thus, the reconstruction algorithms as envisaged in some embodiments may thus use such a back projection operation which maps from projection domain back into image domain, whilst forward projection is the reverse operation as it maps from image domain into projection domain. Forward projection may be implemented by a forward projector FP.

For example, some tomographic reconstruction algorithms envisaged herein can be formulated as an iterative procedure for improving an objective function. Specifically, the procedure may be formulated in terms of optimization, in particular minimization, of a cost function. The cost function measures how well the estimated imagery in image domain provided during the iterations matches the actually available input data, in particular the actually acquired projection images λ.

But, again, such iterative-type reconstruction is not limiting herein. Instead, any other reconstruction algorithm may be used. For example, as will be explored in more detail, a two-pass reconstruction may be used, where one or both of the passes are done in FBP.

Broadly, and turning now in more detail to the proposed image quality enhancer IQE, this is configured herein in embodiments to remove, or to at least reduce, in particular image artifacts that may be partly caused as a result of the functioning of the reconstruction process itself. Specifically, some such artifacts may be caused by the presence of discrete X-radiation occluding (high-density) objects in the examination region, and how they are handled by the reconstruction process. In general, a reconstructed image, or any image in general, may include genuine signals, superimposed with noise signals and/or artifacts signals. Genuine signals are those that represent structural or functional details, in particular those of clinical interest. Artifact signals are different from noise, but both can degrade image quality. Noise is down to random events, whilst some artifacts of main interest herein related to said high-density objects OO, are not. Thus, over and above noise signals, which may be handled by noise filters, and which are not of concern herein, there may be image artifact signals that do not correspond to structural or functional details, just like noise, but are not noise signals.

Ideally, what one would want in imaging is image signals whose distribution does represent structure, for example, organs, tissue type, etc, or indeed any object that actually resided in the examination region when the projection data was acquired. Artifact signals are "bogus" in that they cause image signals or image structures that do not represent any such object. Removal of such artifacts, or at least their reduction, can enhance image quality, thereby better informing therapy, diagnosis or planning, or whatever the imaging purpose.

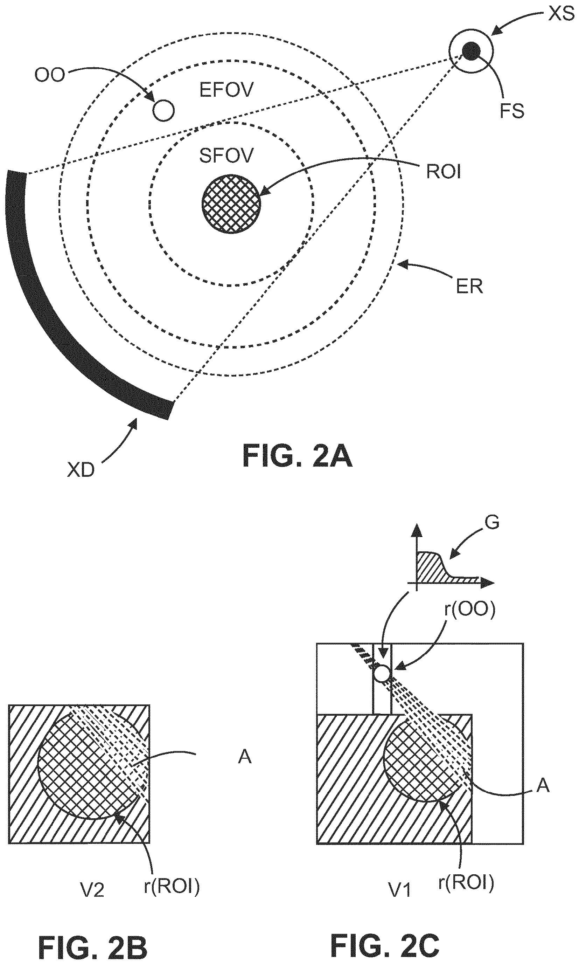

Fig. 2 is an illustration of an example of such artifacts A which may emerge in tomographic imaging, and which may be reduced by the proposed image quality enhancer IQE.

Referring first to Fig. 2A, this shows schematically the image domain/ examination region ER. X-ray source acquires projection imagery at detector XD from multiple spatial directions α as mentioned earlier. Direction α may refer to different positions of X-ray source XS on its scan orbit. The image domain ER is in general the space inside a bore for example of the imager's gantry as shown in Fig 1, an in which the patient, or at least the region of interest ROI, resides during projection data λ acquisition ("scan").

A field of view ("FOV") is a set (which may be a subset of) of voxel in the image domain ER which are populated (reconstructed) by the reconstruction algorithm, based on at least parts of the projection data, to so build up the desired tomographic image V for the FOV.

It should be noted that there are theoretical considerations that limit the region within ER that can be reconstructed without the aforementioned so-called limited angle artifacts. Each point in the theoretically reconstructable region has to be covered by projections over an angle of about 180° degree. The theoretically reconstructable region is also called the scan field of view (SFOV). It may nevertheless be possible to apply reconstruction methods also to regions outside the SFOV, but, as said, these regions may then be affected by so called limited angle artifacts that prohibit diagnostic usage of the reconstructed content, and thus are commonly not reconstructed to save computation resources. A suitable interface UI may be used, or automatically based on imaging protocol, to instruct the reconstructor RECOM to reconstruct voxels only in the SFOV, smaller than the imaging region ER.

However, as illustrated in Fig. 2A, artifacts A may still crop up as a result of highly attenuating/high density objects, referred to herein as "occluding objects" OO, residing in the examination region ER, even outside the scan field of view SFOV. Such artifacts are different from limited angle artifacts, and have different causes.

This is illustrated in Fig. 2B, which shows a reconstruction of the scanned field of view SVOV, where image artifacts *A* are compromising image quality. It has been found in particular that such radio-opaque occluding object OO may impart image artifacts in a reconstructed imagery V2 for the scanned field of view SFOV, despite the occluding objects OO not actually being located within the scanned field of view SFOV so reconstructed.

As shown in Fig. 2B, the intended imagery V2, which may include an image structure r(ROI) that represents the actual ROI region of interest for the imaging task at hand, may be compromised by such artifacts A. This is undesirable as such artifacts may obscure potentially critical diagnostic information and in extreme cases render the acquisition undiagnostic. This is further undesirable as such IQ compromising may necessitate an image re-take, which puts strain on the patient, staff and on the imaging equipment. For example, an anode disc in the x-ray tube XS of the imager is subject to high temperature gradients. Unnecessary re-takes may thus prematurely wear out such discs which may then need to be displaced and may necessitate otherwise unnecessary call-out of service personnel, down time etc. Unnecessary re-takes may also prematurely exhaust the imaging quota set for the imager IA.

Fig. 2C, to the right of Fig. 2B, shows schematically a reconstructed image V1 of a larger imaging region, referred to herein as the extended field of view EFOV, which differs by an extension region Δ from the scanned field SFOV. Thus, reconstructed image V2 for the scanned field of view SFOV, may be an image subset of V1. As such, reconstruction of such an enlarged image V1 may incur additional costs, as more voxels need to be populated. However, it has been found that some such artifacts *A* can be removed by using such an enlarged reconstructed volume V1, in combination with the reconstructed smaller image actually intended V2 for the scanned field of view SFOV, and such is proposed herein of the IQ enhancer IQE.

Image artifacts *A*, such as streak artifacts as shown in Fig. 2B, may be caused in particular by a border portion of the occluding objects OO. Such occluding objects may cause sharp intensity drops G in the measurements, as well as massive so called beam hardening effects. The reconstruction algorithm run by reconstructor RECON may not be able to cope with such deficiencies in the measurements and may thus cause such streak artifacts to emerge in the imagery. Such streak artifacts *A* may impact, thus "reach out" as shown in Fig. 2B,C, into other parts of the imaging region, other than where the structure r(OO) representing the artifact-causing occluding object OO is actually located. In particular, such streak or other artifact *A* may spread out and compromise image quality of the intended diagnostic volume V2 as reconstructed for of the scanned field of view FOV.

Thus, broadly, the image quality enhancer IQE herein uses a two-pass reconstruction set-up, in which two reconstructions (mappings from projection domain into image domain) are used. A forward projection going back into the projection domain may be done in between the two reconstructions. In the first pass, the larger image V1 is reconstructed for the extended field of view EFOV, and is used herein as a "locator image/volume V1" (and as such it will be referred herein). The locater image V1 is so called as it allows locating some, preferably all, such occluding objects that happen to be outside the scan field of view SFOV, but within the extended field of view EFOV as represented, if any, in locator image V1. Information on occluding objects structures, if any, in locator image V1 are forward projected into projection domain. Based on this forward projected information, the actually wanted smaller diagnostic image V2 for the smaller scan field of view SFOV is reconstructed in the second pass. The locating of such occluding objects via the locator volume V1, and thus accounting for same in the correction process, allows eliminating the artifact causing effects of such one or more occluding objects. Thus, locator image V1 should be chosen large enough to ensure that at least one, better most, if not all, such occluding objects OO are imaged.

Due to the small fan angle of common C-arm systems (as compared, say, to CT), image quality is still quite good in the extension region Δ , but artifacts A are clearly visible. The image quality in the extension region may also depend on a truncation correction algorithm used, and such use is preferred herein, but optional. At any rate, it was found that image quality in the extension region is still sufficient to allow the usage of V1 as a locater image. However, use of such (tomographic) truncation algorithm is optional and not a necessity herein.

The above does not preclude using the locator volume V1 for locating even some occluding objects OO inside the SFOV, such may be the case when the locator volume V1's field of view EFOV happens to include all or some of the scanned field of view SFOV, as it may do in some embodiments.

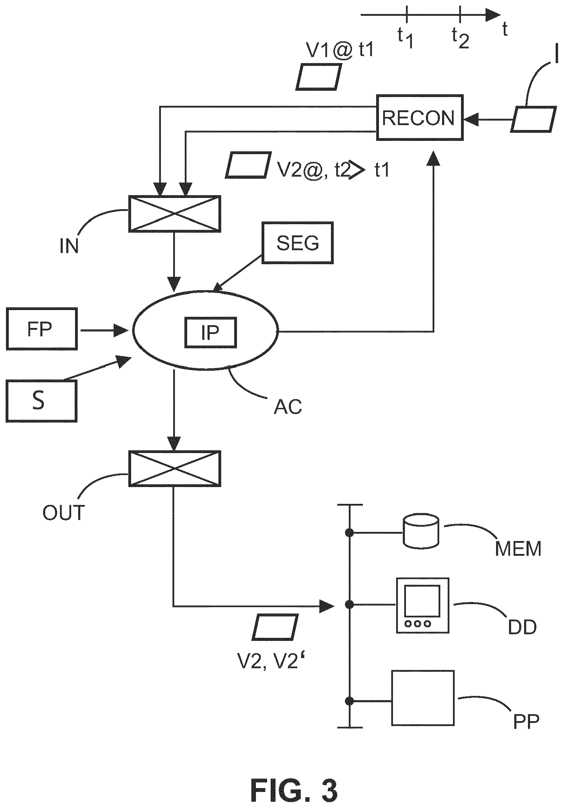

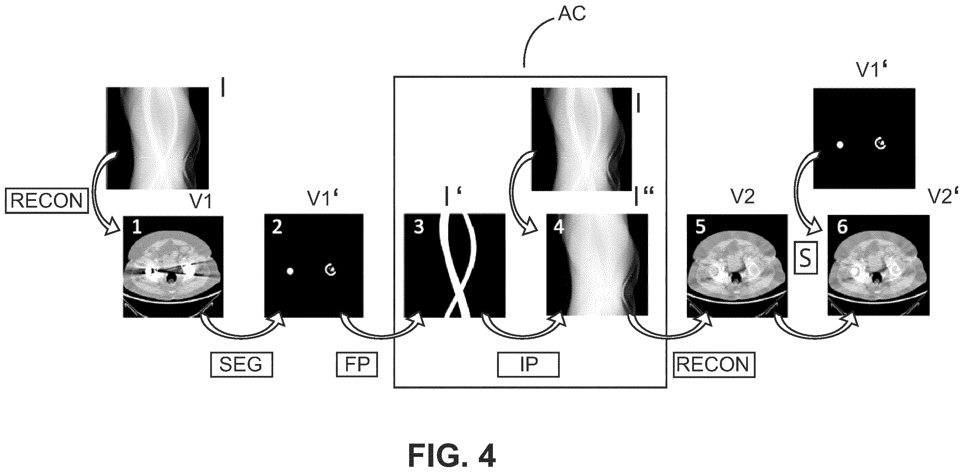

Details of the image quality enhancer system are shown in the block diagrams of Figs 3, 4, to which reference is now made. The block diagram of Fig. 3 illustrates components of the image quality enhancer system IQE, whilst Fig. 4 illustrates data, including intermediate data, generated by the components. Fig. 4 also illustrates the interaction of such components.

Referring now first to Fig. 3, the image quality enhancer IQE, as mentioned, is set-up to cause two pass reconstruction, where at different times *t1,t2* in its execution, two volumes are reconstructed, referred to herein as volumes V1, V2. Reference may be made to such volumes simple as (locator)/first volume V1, and intended/diagnostic/second volume V2.

Consistent with the illustrations in Fig. 1, V1 is the larger OO-locater image, and V2 is the smaller second image, actually intended for imaging task, the ROI to be imaged. Thus, the second image V2 is a reconstruction of the full or parts of the scanned field of view SFOV, whilst the first image V1 is a reconstruction of the extended field of view EFOV, which is larger than the scanned field of view SFOV, as was illustrated before in Fig. 2.

In general, the reconstructed images V1, V2 are such that their respective field of views, SFOV and EFOV, are nested as shown in Fig. 2A with the scanned field of view SFOV wholly included in the extended field of view EFOV. However, this is not a necessity herein, as the two regions may be disjoint, or merely intersecting, but one may not necessarily be partly or wholly included in the other. What is intended herein however is that the extended field of region EFOV extends into region(s) of the image domain ER that are not covered by the scanned field of view SFOV for the diagnostic image V2. Specifically, the extended field of view EFOV for which the first image V1 is reconstructed reaches out into region(s) of the imaging domain in such a manner that some, if not all, occluding objects are covered by the extended field of view EFOV. In general, the extended field of view EFOV is larger than the scanned field of view SFOV by the extension region by Δ. The extended field of view EFOV, and hence the locator image V1, is chosen large enough so that it covers part(s) of the image domain ER that the scanned field of view SFOV/target does not. And it is in those ex- SFOV part(s), the extension region Δ, where at least a part of one or more of the occluding objects OO are located. Thus, as used herein, the locater image V1 represents both, the SFOV and the extension region Δ, whether or not the SFOV is wholly part (a subset) of the extended FOV EFOV. Thus, the locator image V1 is larger than the diagnostic image V2.

User inputs, via user interface UI, an imaging request, and this causes acquisition of the projection data λ for the examination region ER as a whole. This projection data λ is then passed onto the image quality enhancer IQE for processing. In addition, the user may specify in the imaging request the imaging purposes or protocol to be used. In other embodiments, such protocol specification is chosen automatically upon providing details of the patient, which details may be pulled from a hospital information system or other storage where medical records are held.

The imaging protocol, whether user provided by user interface UI or automatically invoked, may set certain imaging parameters, such as tube XS amperage and/or voltage, and/or other imaging settings as needed. In particular, it may specify the size of the imaging region, the scanned field of view SFOV of the diagnostic volume V2 actually to be reconstructed, which is the very subject of the imaging task for which the imaging data λ was acquired. A scan is the run by operation of imager to acquire projection data λ.

After acquisition of projection data λ, the two volumes, the (larger) locator volume V1 and the generally smaller diagnostic volume V2 are reconstructed. In some embodiments, the volumes are not reconstructed at the same time, but at different times t1,,t2, or at least the locator image V1 is used first in the processing by IQ enhancer IQE, and then is the second image V2.

Locater image V1 is reconstructed by reconstructor RECON based on the measured projection data λ. Any reconstruction algorithm such as FBP, iterative or other may be used for V1, and later for V2.

In extreme cases, if there is no prior knowledge of the location and number of occurring occluding objects OO, the extended field of view EFOV for locater volume V1 may comprise the whole of the examination region/image domain ER, but such is generally chosen smaller than the image domain ER. For example, an, eg axial, cross section (across axis Z) of the patient rarely fills up the whole examination region, if ever. Thus, it may be sufficient to choose the extended field of region to cover at least the whole of a relevant (eg, largest) patient's axial cross section. However, there are also scenarios, where it makes sense to choose the EFOV larger than the patient's size, eg when metal objects are known to be outside the patient in the bore, such as items of equipment (eg, cables), etc.

The first pass reconstructed locater image V1 is received at an input interface IN of IQ enhancer IQE. Broadly, artifact corrector AC is operable on data, based on the reconstructed locator volume V1. Artifact corrector AC applies a correction operation based on information gained from the locater image V1. IQ enhancer IQE requests, at a later stage t2, a second pass reconstruction of the second volume V2 for the smaller sized scanned field of view SFOV. This second volume V2 incorporates information from the correction operation and artifacts are reduced or removed in the second pass reconstructed image V2. This is because, as will be detailed below, measurements with extremely low intensity and/or very strong beam hardening effects are taken outside the processing of the second pass reconstruction, to avoid such artifact *A* to be caused in the first place. Thus, the second pass reconstruction no longer needs to cope with such high image values dynamics, as mentioned above in connection with Fig. 2.

Once processing concludes, the artifact reduced image V2 (or V2', as will be explained below) is output through output interface OUT and may then be stored, processed by a post-processer PP, or displayed on a display device DD by operation of visualizer VZ, as needed. Broadly, the artifact corrector AC may act as an orchestrator, orchestrating and coordinating in- and output data, and interaction between plural components of which the image quality enhancer IQE may be comprised, or may interface with, during processing of IQ enhancer IQE. In particular, the artifact corrector AC may coordinate the two-pass reconstructions of the images V1, V2 by the reconstructor RECON, and their processing.

The interaction of the components and data generated by such components, in particular data flow from the input data λ to the artifact reduced output image V2, V2' is illustrated in more detail in Fig. 4, to which further reference is now made.

The acquired projected data λ for the imaging region ER is received and reconstructed into the larger locater volume V1, larger than the later intended volume V2 for the region of interest. As mentioned, the locator volume V1 may or may not necessarily comprise all imaging region ER, and indeed in most cases it does not because most of the imaging region may represent air whilst the patient and the occluding objects will occupy in general only a part of the image domain ER. In general, the locator volume V1 size is so chosen that especially the occluding objects are expected to be included in the extended field of view EFOV of which V1 is a reconstruction. The reconstructed locator volume V1 is then analyzed to locate structures r(OO) of the occluding objects OO of which there can be more than one. The occluding objects OO may be discrete aggregates. Some such may be located in the extension region Δ of extended field of view EFOV (outside of the scanned field of view SFOV).

Locating of the occluding objects OO via their structures r(OO) in locator volume V1 of extended field of view EFOV may be done by segmentation by a segmenter component SEG. Segmenter component SEG may be implemented by machine learning, region growing, model-based segmentation (MBS), or by simple thresholding of image values, as needed. The result of the segmentation, or otherwise of the V1-based localizing of the occluding objects may be result in a segmentation mask V1' which includes signals, only for the occluding objects as located and identified. Such occluding objects OO-signals are indicated as bright dots/chunks in Fig. 4. The signals indicate shape and size of the image structures r(OO) of occluding objects OO. The mask V1' is then forward-projected back into projection domain to obtain mask projection imagery λ' that represents only projection footprints of the identified/located occluding objects OO. Based on the mask projection imagery λ', and the original full projection data λ, artifact corrector AC combines information from both projection image sets to obtain corrected/enhanced projection imagery λ".

For example, artifact corrector AC may use an interpolation algorithm implemented by an interpolator component IP. The interpolator may remove signals as per the masked image from the original projection data set λ. Thus, pixel information at locations indicated by the mask are removed and replaced by new pixel values. For example, an interpolator IP interpolates based on some of the remaining pixels, eg, neighboring the border portion, that are left by the removal, the new pixel values. Thus, the new pixel values fill the void left in the original projection data after the removal. This removal and replacement operation of pixels on the original projection data λ guided by the mask projection data λ' yields enhanced projection data λ". An explicit removal operation may not necessarily be needed. Instead, the pixels in the original projection data λ is simply replaced by the interpolator. An averaging, weighted averaging, or a filtering operation, or any other suitable computational operation, may be used to replace or modify the artifact causing set of pixels r(OO) that represent the one or more occluding objects. As there may be a plural number of discrete such occluding objects, the above described operation may be repeated for such occluding object.

The enhanced projection data λ" obtained is devoid of artifact generating contributions of the occluding objects. This so "cleansed", as it so were, enhanced projection data said λ" is then passed on to reconstructor RECON. The reconstructor RECON, in the second pass, then reconstructs based on the enhanced projection data said λ" the enhanced image V2, in which artifacts caused the by one or more occluding objects OO are now removed, or at least reduced. As mentioned, the reconstructor RECON reconstructs the enhanced image for the intended smaller field of view SFOV. The artifact corrector AC may comprise the interpolator IP, or may be configured to request and or interface with such computational service (ie, the said interpolation) from an outside entity, such as in a cloud setting, or from a local library of computing modules, such as software and/or hardware modules. Thus, artifact correction is accomplished by interaction between the corrector AC and the reconstructor.

In some instances, the so second-pass reconstructed volume V2 constitutes the quality enhanced image in which artifacts from occluding objects are removed, and this image V2 is then output via output interface for use by clinical user. It can be stored, displayed, etc.

In some other embodiments, if there were some occluding objects present even in the smaller scanned field of view, these may be reintroduced, by a combiner Σ. Such combiner Σ may superpose, eg, by voxel wise addition the mask image V1' to the above-mentioned 2nd pass reconstructed image V2, to obtain, as another version, the quality enhanced image V2'. In such version of the quality enhanced image V2', the locations and shape and extent of the occluding objects that happened to be within the smaller scanned field of view, are now represented. However, the other version V2's of the enhanced image, the structures r(OO) of the in-SFOV residing are now represented, but without any artifacts that such structures may have otherwise caused as illustrated in Fig. 2.

Thus, for either version of the enhanced image V2', V2, without combiner Σ's operation, and more generally, the proposed IQ enhancer effects removal/reduction of occluding objects-artifacts by preventing the measurements affected by the occluding objects in the input data λ from being processed by the 2nd pass reconstruction. The first pass locator image V1 may well be compromised by such artifacts. However, this is of no concern herein, as it has been found that despite such artifacts, the occluding object OO image structures r(OO) themselves can be reliably identified, and removed, so that the second pass reconstruction is not exposed to the corresponding measurements in the input data. This relatively reliable identification of the occluding object OO image structures r(OO) in the locater image V1 is facilitated by the fact that some artifacts A, such as the said streak artifacts, tend to have much lower voxels values in the reconstructed volumes than the occluding object's image structures r(OO) themselves.

Following refinement of the image quality enhancer IQE are envisaged herein in some embodiments. Specifically, in order to boost return time, it is proposed herein in some embodiments to reconstruct the two volumes V1, V2 at different resolution levels thereby cutting down overall computation time. For example, in particular, it is the larger locator volume V1 that is reconstructed at a lower resolution than the second image V2. Thus, overall fewer voxels need to be populated thus accelerating overall performance.

As the initial, first-pass reconstruction and the second reconstruction are done with different FOVs, the volume size (the number of voxels in each dimension) and/or voxel size may need to be adapted if the combiner Σ is used. For example, in Fig. 2, the EFOV is by a factor of two larger than the SFOV. Consequently, if the voxel size should be kept constant, the volume size increases along two dimensions by a factor of two, i.e., if the second volume should have a size of 384x384x384 voxels, the initial volume must have a size of 768x 768x384 voxels, which would result in a significant increase in computation time for computation of image quality enhancer IQE. Thus, in some embodiments, voxel size in the initial reconstruction is increased, to limit the increase in volume size and thus computation time. An increased voxel size results in two consequences: 1) an interpolation method may be used by the combiner for "metal reinsertion" (such as when the occluding objects include metal), since the voxels of initial and second reconstruction cannot be mapped one-to-one onto each other otherwise. Trilinear interpolation has been found to yield good results, but other interpolation schemes for grid adaption may be used instead or in addition. 2) since the resolution of the metal objects is lower in the initial reconstruction, the reinserted occluding objects OO appear smoother in the second volume V2. This can be partially mitigated by a sharper reconstruction filter in the initial reconstruction. How strongly the voxel size can be increased thus depends on the final computation time as well as on the clinically needed sharpness of the occluding objects (eg, metal objects) in the final reconstruction.

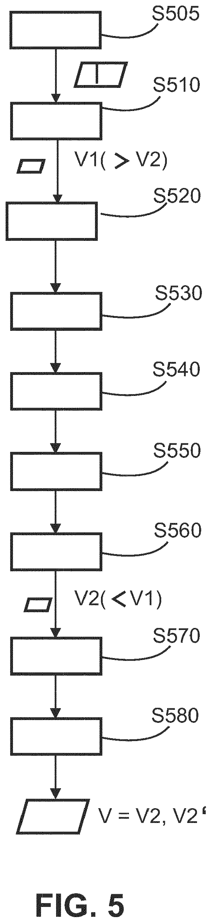

Reference is now made to Fig. 5 which shows a flow chart of an artifact reduction method as may be embedded in a 2-pass-reconstruction workflow. The artifact reduction method may be practiced separately from the reconstructions, on different computing device/systems. The below described method is not necessarily practiced on the system architecture as per Figs 3 or 4 above, but the below may be understood as a teaching in its own right.

At step S505, projection imagery is acquired for the imaging region ER.

At step S5 10 the locater image volume V1 is reconstructed in a first tomographic reconstruction operation, for larger FOV, the extended EFOV, which is larger than the intended scan FOV SFOV for the actually intended volume V2.
The locator volume is then so received at step SS520.

The larger extended EFOV is differently located from the scan SFOV, covering parts of the image domain not covered by the intended scan FOV, whilst it is only the smaller scanned FOV SFOV that is of actual imaging interest as per a medical imaging protocol or imaging purpose. The tomographic reconstruction operation S520 may include a back-projection operation, such as a filtered back-projection, or any other, such as a voxel value update based on a cost function that controls an iterative-type reconstruction. Any other reconstruction algorithms or variants of the back-projection operation are envisaged herein. The reconstruction algorithm preferably but optionally uses a truncation correction algorithm of any kind, for improving IQ of the locater image V1. This may facilitate better localization or identification of the occluding objects OO.

At step S530 respective one or more in-image domain location(s) of at least one occluding object(s) are identified in the locater image V1 based on segmentation for example. Image value thresholding may be used to identify occluding object image structures r(OO). The locations of at least some of the one or more occluding objects OO to which the imaged structures r(OO) correspond are located in the extended FOV EFOV, in the extension region Δ, outside the scan field of view SFOV. In some examples, there is merely a single one such occluding object OO in the extension region Δ.

At step S540, the so identified footprint image structures r(OO) of the occluding objects OO are forward projected, to obtain the mask projection image λ' that represents image value contributions only, or predominantly only, from those identified occluding objects. Thus, the mask projection image λ' is a mask in projection domain, with image value entries only for projection footprints of the identified image structures r(OO) of the occluding objects OO.

At step S550, a projection domain-based correction operation is performed. Specifically, the correction operation may be based on information as per the so obtained mask projection imagery λ' may information as per the original projection imagery λ acquired at step S510. In particular, an interpolation operation may be used in the correction-operation step S550 to remove, in the original projection imagery λ, contributions from the occluding objects based on the locations as per the entries in the mask projection imagery λ', and to replace such removed contributions (projection image/pixel values) with new projection image values. The interpolation operation may yield such new projection image values. The interpolation operation may thus be one of "interpolate-and-replace". The new projection image values now no longer give rise to strong intensity drop or beam hardening effects as before, but intensity values as on the remaining projection values, outside the region of the projection footprints as indicated by the projection domain mask λ'. The interpolation may include averaging or weighted averaging, filtering, etc, based on projection image values taken from the original projection imagery outside the occluding object related footprint area identified by the mask. This correction operation results in projection imagery cleansed from occluding object's contributions, and such projection imagery may be referred to herein as the enhanced proception imagery λ".

At step S560, second pass tomographic reconstruction is then done based now on the enhanced proception imagery λ".

This second reconstruction may use a back-projection operation, like in the first pass reconstruction. The same or a different reconstruction algorithm as in the first pass reconstruction. As in the first pass reconstruction, a truncation correction algorithm may be used in the second pass reconstruction. The second pass reconstruction is done for a smaller region and/or a different region SFOV, smaller than and/or differently located from the region in image domain EFOV for which the locater image was reconstructed. The reconstruction V2 for the smaller image domain region SFOV represents the image to be reconstructed, including the region of interest, such as one that corresponds to patient's liver or other organ or anatomical areas of interest, as needed. Because the high gradient image contributions in the projection domain of the one or more occluding objects are no longer processed by the second pass reconstruction due their removal, the resulting image V2 no longer suffers from occluding object caused artifacts, such as streak artifacts or others. This second pass reconstructed image V2 may then be provided at step S580 as final output.

The removal of occluding object contributions r(OO) in projection domain was done at step S550 preferably for all of the locater image V1, representing the extended FOV EFOV, including for scanned FOV SFOV.

Thus, an optionally combiner step S570 may be used, if there were occluding object's present in the scanned FOV SFOV. Their image structures may be added back by superposition (voxels wise addition), or simple replacement, in the second pass reconstructed image V2, in order to obtain the so combined image as final image V2' for output. Thus, the scan FOV SFOV is the same for both, the combined image V2' and reconstructed image V2. Thus, both have preferably the same size.

If the first and second pass reconstructions were done at different resolutions to save compute time by using a smaller resolution for the larger locator image V1 than for the target image V2, the combiner step S570 may include a prior spatial adaption operation as a pre-processing. For example, an (additional) spatial interpolation may be used to reconcile the different grid/voxel sizes, such as via trilinear interpolation as mentioned above. It may also be possible to extrapolate to the larger grid from the smaller diagnostic image V2, although this may be less preferred.

In both versions, V2,V2', the artifacts A are removed as the artifacts causing footprints of the image structures r(OO) corresponding to the occluding object(s) were taken outside the second pass reconstruction, so that they do not interfere with reconstruction algorithm sued there, thus avoiding the artifacts to emerge in the first place.

At the said output step S580, the so second-pass reconstructed image V2,V2', in whichever version, is then provided as needed. The so artifact reduced image V2, V2' may be placed in storage, may be displayed, or may be otherwise image processed as needed, such as another segmentation for the ROI, etc, or whatever the imaging task/purpose.

The components of the image quality enhancer IQE may be implemented as one or more software modules, run on one or more general-purpose processing units PU such as a workstation associated with the imager IA, or on a server computer associated with a group of imagers.

Alternatively, some or all components of the quality enhancer IQE may be arranged in hardware such as a suitably programmed microcontroller or microprocessor, such an FPGA (field-programmable-gate-array) or as a hardwired IC chip, an application specific integrated circuitry (ASIC), integrated into the imaging system IA. In a further embodiment still, the quality enhancer IQE may be implemented in both, partly in software and partly in hardware.

The different components of the quality enhancer IQE may be implemented on a single data processing/computing system. Alternatively, some or more components are implemented on different data processing/ computing systems, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A system (IQE) for image processing, comprising:
An input interface (IN) for receiving a first image volume (V1) reconstructable from projection data (λ) acquirable by a tomographic imaging apparatus's X-ray detector of a first region (EFOV) of an imaging domain (ER), with at least one occluding object (OO), or at least a part thereof, residable in said region during the acquisition, but the at least one occluding object (OO), or at least a part of the occluding object (OO), residable outside a second region (SFOV) of the imaging domain (ER), different from the first region (EFOV), and with the said second region (SFOV) includable a region of interest (ROI) to be imaged, and
an artifact corrector (AC) capable of correcting, based on the said first volume (V1), for image artifact causable by the said occluding object (OO) in a second image volume (V2) reconstructable from the said projection data (λ) of the second region (SFOV) in the said imaging domain (ER).

2. The system of claim 1, wherein the first region is larger than the second region.

3. The system of claim 1 or 2, wherein the first and second region are intersecting.

4. The system of any one of the previous claims, wherein second region is a sub-region of the first region.

5. The system of any one of the previous claims, wherein the occluding object (OO) is so residable wholly outside the second region (SFOV).

6. The system of any one of the previous claims, wherein a correction operation of the artifact corrector is based on forward projection operation across the first volume.

7. The System of any one of the previous claims, wherein the or a correction operation by artifact corrector (AC) is based on a segmentation in the first volume (V1) of a representation r(OO) of the said occluding object (OO).

8. The system of any one of the previous claims, wherein first volume (V1) is so reconstructable at a lower resolution than the second volume (V2).

9. The system of any one of the previous claims, wherein the occluding object includes metal.

10. The system of any one of the previous claims, wherein the imagining apparatus is any one of: a computed tomography scanner, CT, a cone beam CT, an interventional X-ray imaging apparatus such as of the C- or U-arm type.

11. An imaging arrangement (IAR), including the system of any one of the preceding claims, and any one or more of: i) the detector (XD), ii) the imaging apparatus (IA), iii) an operator console (OC) or work station of the imaging apparatus, iv) a reconstructor (RECON) supplying at least one of the first and second image volume.

12. A method of image processing, comprising:
receiving (S520) a first image volume (V1) reconstructable from projection data (λ) acquirable by a tomographic imaging apparatus's X-ray detector of a first region (EFOV) of an imaging domain (ER), with at least one occluding object (OO), or at least a part thereof, residable in said region during the acquisition, but the at least one occluding object (OO), or at least a part of the occluding object (OO), residable outside a second region (SFOV) of the imaging domain (ER), different from the first region (EFOV), and with the said second region (SFOV) includable a region of interest to be imaged, and
correcting (S550), based on the said first volume (V1), for image artifact causable by the said occluding object (OO) in a second image volume (V2) reconstructable from the said projection data (λ) of the second region (SFOV) in the said imaging domain (ER).

13. At least one computer program element, which, when being executed by at least one computing system, is adapted to cause the at least one computing system to perform the method as per claim 12.

14. At least one computer readable medium having stored thereon the at least one program element of claim 13.

15. Use of image information in a reconstructed image (V1) for an extended field of view (EFOV) in artifact correction in a smaller reconstructable image (V2), for a smaller field of view (SFOV), wherein the corrected-for artifact is causable by at least one occluding object (OO) situatable at least partly outside the smaller field of view (SFOV).
